# EUROPÄISCHE PATENTSCHRIFT

(11) **EP 1 880 352 B1**
(45) Veröffentlichungstag und Bekanntmachung des Hinweises auf die Patenterteilung: **12.07.2017**
(21) Anmeldenummer: 06742903.5
(22) Anmeldetag: 12.05.2006
(51) Int. Cl.: H04M 15/00, H04W 4/24

(54) **VORRICHTUNG UND VERFAHREN ZUR KOMMUNIKATION ZWISCHEN EINEM MOBILEN ENDGERÄT UND DEM INTERNET**
DEVICE AND METHOD FOR COMMUNICATING BETWEEN A MOBILE TERMINAL AND THE INTERNET
DISPOSITIF ET PROCÉDÉ POUR ETABLIR UNE COMMUNICATION ENTRE UN TERMINAL MOBILE ET L'INTERNET

(30) Priorität: 13.05.2005 DE 102005022341
(43) Veröffentlichungstag der Anmeldung: 23.01.2008
(73) Patentinhaber: Telefónica Germany GmbH & Co. OHG, 80992 München (DE)
(72) Erfinder: HETZEL, Marko, D-41352 Korschenbroich (DE); STANGL, Franz, 85716 Unterschleissheim (DE)
(74) Vertreter: Herrmann, Uwe
(86) Internationale Anmeldenummer: PCT/EP2006/004495
(87) Internationale Veröffentlichungsnummer: WO 2006/122724

(56) Entgegenhaltungen:
- EP-A- 0 801 479
- WO-A-99/31610
- US-A1- 2004 078 274
- US-A1- 2004 247 100

## Beschreibung

Die Erfindung betrifft eine Vorrichtung und ein Verfahren zur Kommunikation zwischen einem mobilen Endgerät und dem Internet. Eine derartige Kommunikation zwischen mobilen Endgeräten, beispielsweise Handys und dem Internet erfolgt über ein Mobile Data Gateway, der die vom mobilen Endgerät eintreffenden Anfragen in eine für den Web-Server lesbare Sprache übersetzt. Die Antworten des Web-Servers werden im Mobile Data Gateway modifiziert an das mobile Endgerät übertragen.

Der Aufruf von Internetseiten durch den Nutzer des mobilen Endgerätes ist zumindest für einen Teil der Internetseiten kostenpflichtig. Bei heute üblichen Kommunikationssystemen erfährt der Nutzer während der Internetnutzung nicht, ob er sich auf kostenpflichtigen Seiten des Internets befindet oder nicht.

Die WO 99/31610 A offenbart einen Gateway-Server, der den Zugang für Endteilnehmer zu Servern eines Drittanbieters bereitstellt. Auf Serverseite der Drittanbieter ist eine Datenbank vorgesehen, die einem kostenpflichtigen Aufruf eines bestimmten Serverinhalts einen Preiscode zuordnet. Der Gateway-Server bestimmt unter Berücksichtigung des Preiscodes ein vom Endbenutzer zu entrichtenden Preis, der dem Nutzer durch ein Anzeigemittel mitgeteilt wird.

Es ist die Aufgabe der vorliegenden Erfindung, ein Kommunikationssystem und Verfahren der eingangs genannten Art dahingehend weiterzubilden, dass der dem mobilen Internetnutzer bereitgestellte Service verbessert wird.

Diese Aufgabe wird durch ein Kommunikationssystem mit den Merkmalen des Anspruchs 1 und durch ein Verfahren mit den Merkmalen des Anspruchs 7 gelöst.

Das erfindungsgemäße Kommunikationssystem weist neben dem Mobile Data Gateway eine Datenbank auf, die für Nutzer der mobilen Endgeräte Informationen betreffend die Kosten und/oder Kostenpflicht von Internetseiten enthält. Diese Datenbank kann beispielsweise für jeden Nutzer die Kosten enthalten, die bei Aufruf von Internetseiten dem Nutzer in Rechnung gestellt werden. Die Datenbank kann die Information enthalten, welcher Aufruf einer Internetseite für welchen Nutzer mit welchen Kosten verbunden ist. Dabei können die Kosten je nach Nutzer unterschiedlich sein und davon abhängen, welche Dienstleistung, d.h. welche Datenpakete bzw. Internetseiten von einem Nutzer gebucht sind. Der Aufruf dieser Internetseiten kann beispielsweise durch eine Pauschalgebühr (flatrate) erfasst sein, so dass für den Aufruf der betreffenden Seite keine weitere Gebühr anfällt. Internetseiten, deren Aufruf durch eine solche Pauschalgebühr nicht gedeckt sind, können somit über die Pauschalgebühr hinaus kostenpflichtig sein. Da die Nutzer im Regelfall nicht alle dasselbe Datenpaket gebucht haben, wird häufig der Fall eintreten, dass eine bestimmte Internetseite für einen Nutzer kostenpflichtig bzw. über einen etwaigen Pauschalbetrag hinaus kostenpflichtig ist, während der Aufruf dieser Seite für einen anderen Nutzer nicht kostenpflichtig ist bzw. durch den Pauschalbetrag abgedeckt ist.

Bei dem Mobile Data Gateway kann es sich beispielsweise um einen WAP-Gateway handeln. Jedoch ist die Erfindung nicht auf den WAP-Dienst beschränkt.

Das Kommunikationssystem umfasst ferner eine Prüfeinheit, mittels derer anhand der in der Datenbank abgelegten Informationen und der vom Nutzer angeforderten Internetseite eine Information betreffend die Kosten und/oder Kostenpflicht der vom Nutzer angeforderten Internetseite erstellt wird. Diese Prüfeinheit ermittelt die Kosten und/oder die Tatsache der Kostenpflicht für eine vom Nutzer angeforderte Internetseite. Die Kosten bzw. die Kostenpflicht hängt davon ab, welche Internetseite der Nutzer aufrufen möchte und welche Internetseiten für ihn mit welchen Kosten verbunden sind. Das Ergebnis der Prüfung hängt somit davon ab, welche Internetseite der Nutzer anfordert, d.h. aufrufen möchte, und welches Datenpakt er gebucht hat.

Die seitens der Prüfeinheit generierte Information kann beispielsweise zum Gegenstand haben, dass die angeforderte Internetseite für den betreffenden Nutzer von der Pauschalgebühr gedeckt ist oder dass eine darüber hinaus gehende Gebühr zu entrichten ist. Denkbar ist, dass die Prüfeinheit die Kosten ermittelt und/oder ohne Angabe der Kosten feststellt, dass eine Kostenpflicht besteht. Denkbar ist, dass die Prüfeinheit ermittelt, ob die angeforderte Internetseite zu einer Änderung des Kostenlevels führt, d.h. ob sich bei Aufruf der Internetseite eine Kostensteigerung oder Kostenminderung gegenüber den Kosten für die aktuell aufgerufene Internetseite ergibt.

Ferner sind Mittel vorgesehen, mittels derer basierend auf der in der Prüfeinheit erstellten Information eine für den Nutzer des mobilen Endgerätes wahrnehmbare Anzeige generierbar ist. Die Anzeige kann beispielsweise optisch und/oder akustisch wahrnehmbar sein.

Die Prüfeinheit bzw. die Mittel zur Generierung der Anzeige können derart ausgeführt sein, dass eine Anzeige nur dann generiert wird, wenn sich bei Freigabe der angeforderten Internetseite eine Änderung im Kostenlevel ergibt. Dabei kann vorgesehen sein, dass die Anzeige generiert wird, wenn der Nutzer ausgehend von einer aktuell aufgerufenen Internetseite günstigere und/oder teurere Internetseiten anfordert.

Die Datenbank und/oder die Prüfeinheit können vom Mobile Data Gateway getrennte Einheiten sein, wobei die Prüfeinheit mit dem Mobile Data Gateway in Verbindung steht. Denkbar ist beispielsweise, dass die Prüfeinheit bei Anforderung einer Internetseite durch den Nutzer von dem Mobile Data Gateway eine entsprechende Anfrage erhält und daraufhin prüft, ob bzw. mit welchen Kosten der Aufruf der Internetseite für den Nutzer verbunden wäre. Die Datenbank kann mit der Prüfeinheit eine bauliche Einheit bilden.

Denkbar ist ferner, dass die Datenbank und/oder die Prüfeinheit Bestandteile des Mobile Data Gateway sind. Bei einer solchen Ausführung der Erfindung ergibt sich ein Vorteil daraus, dass die Anfragen an eine externe Datenbank nicht oder nur in einem geringeren Ausmaß erfolgen müssen.

Die Prüfeinheit ist derart ausgeführt, dass ein Vergleich zwischen der Kostenpflicht der vom Nutzer angeforderten Internetseite und der Kostenpflicht der zum Zeitpunkt der Anforderung vom Nutzer tatsächlich genutzten Internetseite durchgeführt wird, wobei die in der Prüfeinheit erstellte Information betreffend die Kosten und/oder Kostenpflicht der vom Nutzer angeforderten Internetseite auf diesem Vergleich basiert. Wie oben ausgeführt ist denkbar, dass eine für den Nutzer wahrnehmbare Anzeige nur dann generiert wird, wenn sich hinsichtlich der Kosten eine Abweichung zwischen der aktuell genutzten Internetseite und der seitens des Nutzers angeforderten Internetseite ergibt. Dies kann für den Fall gelten, dass ein Wechsel zu teureren und/oder billigeren Internetseiten angestrebt wird.

In einer weiteren Ausgestaltung der Erfindung ist eine vom Mobile Data Gateway getrennte Einheit vorgesehen, die eine erste Prüfeinheit und eine erste Datenbank enthält. Dabei enthält der Mobile Data Gateway eine zweite Prüfeinheit und eine zweite Datenbank, wobei die zweite Prüfeinheit des Mobile Data Gateway derart ausgeführt ist, dass für den Fall, dass eine Information betreffend die Kosten und/oder Kostenpflicht der vom Nutzer angeforderten Internetseite in der zweiten Prüfeinheit nicht erstellt werden kann, die erste Prüfeinheit mit der Erstellung dieser Information beauftragt wird. Denkbar ist somit eine Ausführung, bei der ein Teil der Anfragen des Nutzers bereits in der Prüfeinheit des Mobile Data Gateways, d.h. in der zweiten Prüfeinheit abgearbeitet werden können. Anfragen, die in der Prüfeinheit des Gateways nicht bearbeitet werden können, werden an die erste Prüfeinheit geleitet, die sodann die Information betreffend die Kosten und/oder Kostenpflicht der vom Nutzer angeforderten Internetseite generiert.

In einer Ausgestaltung der Erfindung enthält die Datenbank die Information, ob eine seitens des Nutzers angeforderte Internetseite für den die Seite anfordernden Nutzer über eine Pauschalgebühr hinaus kostenpflichtig ist bzw. welche Internetseiten von der Pauschalgebühr erfasst sind.

In weiterer Ausgestaltung der Erfindung ist ein Betätigungselement vorgesehen, bei dessen Betätigung nach der Generierung der Anzeige die aufgerufene Internetseite für den Nutzer freigegeben wird. Bei dieser Ausführung der Erfindung wird die aufgerufene Seite erst dann freigeschaltet bzw. dem Nutzer zur Verfügung gestellt, wenn er eine entsprechende Bestätigung abgibt.

Die Erfindung betrifft ferner ein Verfahren zur Kommunikation zwischen einem mobilen Endgerät und dem Internet mit einem Mobile Data Gateway, wobei bei Anforderung einer Internetseite eine für den Nutzer wahrnehmbare Anzeige betreffend die Kosten und/oder Kostenpflicht für den Aufruf der Seite generiert wird.

Erfindungsgemäß wird die Anzeige betreffend die Kosten und/oder Kostenpflicht nur dann generiert, wenn der Nutzer eine Internetseite anfordert, deren Kosten sich von den Kosten der Internetseite unterscheidet, die der Nutzer zu dem Zeitpunkt der Anforderung nutzt.

In weiterer Ausgestaltung der Erfindung ist vorgesehen, dass eine Anzeige dann generiert wird, wenn die Kosten für die angeforderte Internetseite von einer seitens des Nutzers entrichteten Pauschalgebühr nicht gedeckt sind.

Des Weiteren kann vorgesehen sein, dass die angeforderte Internetseite für den Nutzer freigeschaltet wird, nachdem die Anzeige generiert wurde und nachdem seitens des Nutzers ein Betätigungselement betätigt wurde.

Weitere Einzelheiten und Vorteile der Erfindung werden anhand eines in der Zeichnung dargestellten Ausführungsbeispiels näher erläutert. Es zeigen:

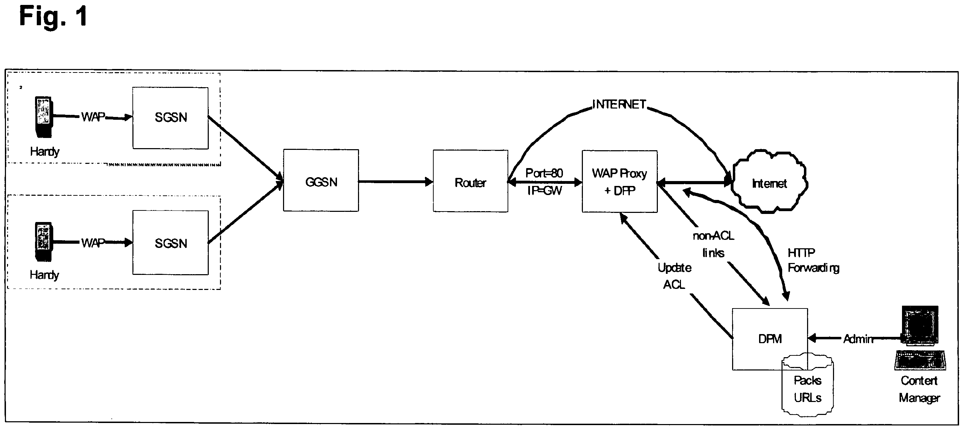

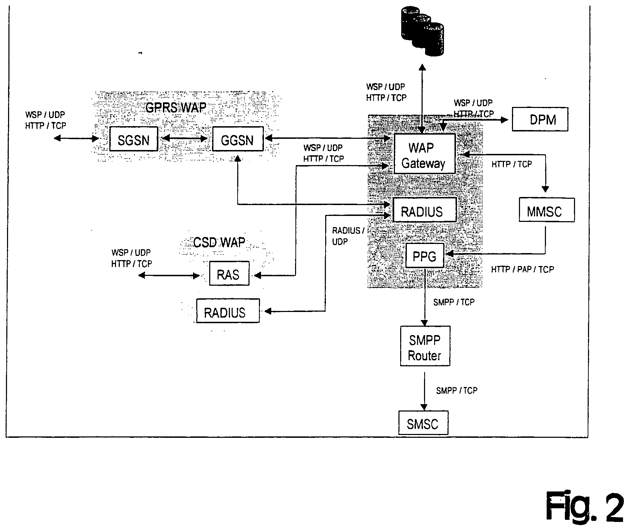

Fig. 1, 2: schematische Darstellungen des Kommunikationssystems gemäß der Erfindung.

Fig. 1 zeigt den Zugang zum Internet mittels eines Handys per SGSN (Serving GPRS Support Node) und GGSN (Gateway GRPS Support Node). Die Verwendung des Trägers auf der Funkstrecke ist weitgehend beliebig. Möglich sind außer GPRS unter anderem CSD, HSCSD sowie UMTS. Über den Router ist ein direkter Zugang zum Internet möglich, wie dies in Fig. 1 angedeutet ist.

Für die vorliegende Erfindung relevant ist der Weg in das Internet über den in diesem Ausführungsbeispiel als WAP-Gateway "WAP-Proxy + DPP" ausgeführten Mobile Data Gateway, bei dem es sich um einen Proxy handelt, der die Kommunikation zwischen dem WAP-Client, d.h. dem mobilen Endgerät und einem Web-Server steuert. Die Abkürzung DPP steht für "Data Packages Proxy". Die Kommunikation kann unmittelbar mit einem Web-Server oder mittelbar über einen Portalserver eines Mobilfunkbetreibers erfolgen. Wie dies weiter aus Fig. 1 ersichtlich ist, steht der WAP-Gateway mit einer als DPM (Data Packages Manager) bezeichneten ersten Prüfeinheit über die Schnittstelle DPP in Verbindung. Die erste Prüfeinheit steht ihrerseits mit einer ersten Datenbank "Packs URLs" in Verbindung. Die erste Prüfeinheit DPM greift im Bedarfsfall auf die erste Datenbank "Packs URLs" zu.

Der WAP-Gateway weist seinerseits ebenfalls eine zweite Prüfeinheit sowie eine zweite Datenbank auf, auf die mittels der zweiten Prüfeinheit zugreifbar ist.

Auf die erste Prüfeinheit bzw. die erste Datenbank ist im Sinne einer Datenänderung oder eines Datenabrufs zugreifbar, wie dies durch die Begriffe "Admin" und "Content Manager" angedeutet ist.

Die Funktion der in Fig. 1 dargestellten Anordnung gestaltet sich wie folgt:
Ein Nutzer fordert mittels seines Handys eine bestimmte Internetseite an. Dieser request wird per SGSN und GGSN sowie den Router an den WAP-Gateway geleitet. In dem WAP-Gateway wird mittels der zweiten Prüfeinheit und anhand der zweiten Datenbank ermittelt, welche Kosten für den anfragenden Nutzer mit dem Aufruf der Internetseite verbunden sind. Denkbar ist beispielsweise, dass eine Internetseite angefordert wurde, die für alle Nutzer mit denselben Kosten verbunden sind oder die für alle Nutzer von einer Pauschalgebühr gedeckt sind. Lässt sich die Information betreffend die Kosten oder Kostenpflicht der angeforderten Internetseite in der Prüfeinheit des WAP-Gateway generieren, erübrigt sich eine Anfrage an die erste Prüfeinheit DPM. Beispielsweise wird der Anfrage stattgegeben, d.h. die angeforderte Seite wird an dem mobilen Endgerät angezeigt.

Kann in der zweiten Prüfeinheit des WAP-Gateway jedoch keine Feststellung hinsichtlich der Kosten oder Kostenpflicht der angeforderten Internetseite vorgenommen werden, leitet der WAP-Gateway den request weiter an die erste Prüfeinheit DPM, wie dies durch den Vermerk "non-ACL links" angegeben ist.

Die erste Prüfeinheit ermittelt, welcher Nutzer die betreffende Internetseite angefordert hat und stellt sodann anhand der ersten Datenbank "Packs URLs" fest, welches Datenpaket der Nutzer gebucht hat. Auf der Grundlage dieser Informationen stellt die erste Prüfeinheit fest, welche Kosten mit dem Aufruf der Internetseite für den Nutzer verbunden sind bzw. ob diese Kosten mit der seitens des Nutzers entrichteten Pauschalgebühr abgegolten sind. Die erste Prüfeinheit vergleicht anschließend die Kosten der von dem Nutzer zum Zeitpunkt der Anfrage genutzten Internetseite mit den für die angeforderte Internetseite entstehenden Kosten. Ergibt der Vergleich, dass sich kein Kostenunterschied ergibt, erteilt die erste Prüfeinheit dem WAP-Gateway die Instruktion, die angeforderte Seite freizugeben, wie dies durch den Vermerk "http Forwarding" angedeutet ist. Wird festgestellt, dass sich eine Kostendifferenz ergibt, erteilt die erste Prüfeinheit dem WAP-Gateway die Instruktion, dem Nutzer anzuzeigen, dass sich eine Kostenminderung oder - steigerung ergibt.

Die Anzeige kann beispielsweise in Form einer auf dem Display erscheinenden Information wiedergegeben werden.

Der WAP-Gateway wird von der ersten Prüfeinheit DPM gesteuert. Denkbar ist, dass die erste Prüfeinheit dem WAP-Gateway die Instruktion erteilt, die genannte Anzeige zu generieren oder einen request ohne eine solche Anzeige freizuschalten oder einen request zu blockieren, was bei Betrugsfällen relevant sein kann.

Die erste Prüfeinheit kann neben der oben genannten Funktion auch die Funktion aufweisen, den WAP-Gateway anzuweisen, bei welchen requests eine Anfrage an die erste Prüfeinheit DPM zu richten ist und bei welchen requests dies nicht der Fall sein soll, d.h. den WAP-Gateway zu konfigurieren.

Mit dem Vermerk "Update ACL" ist das Merkmal angedeutet, dass eine erneute Anzeige für Internetseiten unterbleiben soll, die der Nutzer bereits aufgerufen hatte. Während eines Internetzugangs soll somit dem Nutzer pro Seite nur einmal die Information hinsichtlich einer Kostenpflicht der Internetseite angezeigt werden.

Fig. 2 zeigt das erfindungsgemäße Kommunikationssystem in einer weiteren Darstellung. Hieraus ist ersichtlich, dass der Zugang zum WAP-Gateway beispielsweise per GPRS oder per CSD erfolgen kann. Aus Fig. 2 ist weiter die erste Prüfeinheit DPM ersichtlich, die im Bedarfsfall auf die Einheit "Radius" zugreift, um zu ermitteln, welcher Nutzer eine Internetseite anfordert. Diese Information erhält die Einheit "Radius" von dem GGSN, wie dies in Fig. 2 angedeutet ist.

Aus Fig. 2 geht weiter hervor, dass das Versenden einer MMS über das WAP-Gateway stets möglich ist. Dabei steuert die erste Prüfeinheit DPM den WAP-Gateway derart an, dass eine MMS stets gesendet und empfangen werden kann, selbst wenn der oben genannte Service der Anzeige eines für den Nutzer wahrnehmbaren Hinweises nicht verfügbar sein sollte.

Der oben beschriebene Service steht vorzugsweise nur für die Nutzer zur Verfügung, die bei Zahlung eines entsprechenden Pauschalbetrages befugt sind, per WAP das Internet zu nutzen und dabei unterschiedliche Datenpakete buchen können.

Der erfindungsgemäße Service steht vorzugsweise unabhängig davon zur Verfügung, ob auf das Internet über einen Portalserver eines Mobilfunkbetreibers oder auf einen externen Link zugegriffen wird.

In einer möglichen Ausgestaltung der Erfindung kann der Service der Generierung einer Anzeige seitens des Nutzers oder Mobilfunkbetreibers abschaltbar sein.

Des Weiteren ist vorzugsweise vorgesehen, dass die Anzeige für den Nutzer auch dann vorgenommen wird, wenn nicht die gesamte Internetseite kostenpflichtig ist oder eine Kostenänderung hervorruft, sondern z.B. nur ein Bestandteil.

Wie oben ausgeführt, besteht eine vorteilhafte Ausgestaltung der Erfindung darin, dass der WAP-Gateway eine eigene Prüfeinheit aufweist, so dass nicht jeder request an die erste Prüfeinheit gerichtet werden muss. Denkbar ist beispielsweise, dass von 100 Handynutzern 90% keine Nutzer des erfindungsgemäßen Service sind. Von den verbleibenden 10% der Nutzer sind beispielsweise 90% der Anfragen zu beantworten, ohne dass die erste Prüfeinheit eingeschaltet werden muss. Somit ergibt sich für dieses Beispiel, dass die erste Prüfeinheit nur mit 1 % der gesamten requests befasst ist.

## Patentansprüche

1. Vorrichtung zur Kommunikation zwischen einem mobilen Endgerät und dem Internet mit einem Mobile Data Gateway, der den Zugriff auf Inhalte des Internet mittels eines mobilen Endgerätes steuert, mit einer Datenbank, die für Nutzer der mobilen Endgeräte Informationen betreffend die Kosten und/oder Kostenpflicht von Internetseiten enthält, mit einer Prüfeinheit, mittels derer anhand der in der Datenbank abgelegten Informationen und der vom Nutzer angeforderten Internetseite eine Information betreffend die Kosten und/oder Kostenpflicht der vom Nutzer angeforderten Internetseite erstellt wird, sowie mit Mitteln, mittels derer basierend auf der in der Prüfeinheit erstellten Information eine für den Nutzer des mobilen Endgerätes wahrnehmbare Anzeige generierbar ist,
**dadurch gekennzeichnet, dass** die Prüfeinheit derart ausgeführt ist, dass ein Vergleich zwischen den Kosten oder der Kostenpflicht der vom Nutzer angeforderten Internetseite und den Kosten oder der Kostenpflicht der zum Zeitpunkt der Anforderung vom Nutzer tatsächlich genutzten Internetseite durchgeführt wird, und dass die in der Prüfeinheit erstellte Information betreffend die Kosten und/oder Kostenpflicht der vom Nutzer angeforderten Internetseite auf diesem Vergleich basiert.

2. Vorrichtung nach Anspruch 1 oder 2, **dadurch gekennzeichnet, dass** die Datenbank und/oder die Prüfeinheit vom Mobile Data Gateway getrennte Einheiten sind, wobei die Prüfeinheit mit dem Mobile Data Gateway in Verbindung steht.

3. Vorrichtung nach Anspruch 1 oder 2, **dadurch gekennzeichnet, dass** die Datenbank und/oder die Prüfeinheit Bestandteile des Mobile Data Gateway sind.

4. Vorrichtung nach einem der vorhergehenden Ansprüche, **dadurch gekennzeichnet, dass** eine vom Mobile Data Gateway getrennte Einheit vorgesehen ist, die eine erste Prüfeinheit und eine erste Datenbank enthält, und dass der Mobile Data Gateway eine zweite Prüfeinheit und eine zweite Datenbank enthält, wobei die zweite Prüfeinheit des Mobile Data Gateway derart ausgeführt ist, dass für den Fall, dass eine Information betreffend die Kosten und/oder Kostenpflicht der vom Nutzer angeforderten Internetseite in der zweiten Prüfeinheit nicht erstellt werden kann, die erste Prüfeinheit mit der Erstellung dieser Information beauftragt wird.

5. Vorrichtung nach einem der vorhergehenden Ansprüche, **dadurch gekennzeichnet, dass** die Datenbank die Information enthält, ob eine seitens des Nutzers angeforderte Internetseite für den die Seite anfordernden Nutzer über eine Pauschalgebühr hinaus kostenpflichtig ist oder welche Internetseiten von der Pauschalgebühr erfasst sind.

6. Vorrichtung nach einem der vorhergehenden Ansprüche, **dadurch gekennzeichnet, dass** ein Betätigungselement vorgesehen ist, bei dessen Betätigung nach der Generierung der Anzeige die aufgerufene Internetseite für den Nutzer freigegeben wird.

7. Verfahren zur Kommunikation zwischen einem mobilen Endgerät und dem Internet mit einem Mobile Data Gateway, **dadurch gekennzeichnet, dass** bei Anforderung einer Internetseite eine für den Nutzer wahrnehmbare Anzeige betreffend die Kosten und/oder Kostenpflicht für den Aufruf der Internetseite generiert wird, **dadurch gekennzeichnet, dass** die Anzeige betreffend die Kosten und/oder Kostenpflicht nur dann generiert wird, wenn der Nutzer eine Internetseite anfordert, deren Kosten sich von den Kosten der Internetseite unterscheidet, die der Nutzer zum Zeitpunkt der Anforderung nutzt.

8. Verfahren nach Anspruch 7, **dadurch gekennzeichnet, dass** eine Anzeige generiert wird, wenn die Kosten für die angeforderte Internetseite von einer seitens des Nutzers entrichteten Pauschalgebühr nicht gedeckt sind.

9. Verfahren nach einem der vorhergehenden Ansprüche 7 oder 8, **dadurch gekennzeichnet, dass** die angeforderte Internetseite für den Nutzer freigeschaltet wird, nachdem die Anzeige generiert wurde und nachdem seitens des Nutzers ein Betätigungselement betätigt wurde.Nutzers ein Betätigungselement betätigt wurde.

## Claims

1. An apparatus for communication between a mobile terminal and the internet having a mobile data gateway that controls the access to content of the internet by means of a mobile terminal; having a database that contains information for the user of the mobile terminals relating to the costs and/or cost liability of internet sites; having a check unit by means of which information relating to the costs and/or cost liability of the internet sites requested by the user is prepared using the information stored on the database and the internet site requested by the user; and having means by means of which a display perceptible for the user of the mobile terminal can be generated on the basis of the information prepared in the check unit, **characterized in that** the check unit is configured such that a comparison is carried out between the costs or the cost liability of the internet site requested by the user and the costs or the cost liability of the internet site actually used by the user at the time of the request; and **in that** the information prepared in the check unit relating to the costs and/or cost liability of the internet site requested by the user is based on this comparison.

2. An apparatus in accordance with claim 1 or claim 2, **characterized in that** the database and/or the check unit is/are unit(s) separate from the mobile data gateway, with the check unit being connected to the mobile data gateway.

3. An apparatus in accordance with claim 1 or claim 2, **characterized in that** the database and/or the check unit is/are component(s) of the mobile data gateway.

4. An apparatus in accordance with one of the preceding claims, **characterized in that** a unit separate from the mobile data gateway is provided that includes a first check unit and a first database; and **in that** the mobile data gateway includes a second check unit and a second database, with the second check unit of the mobile data gateway being configured such that in the event that no information can be prepared in the second check unit relating to the costs and/or the cost liability of the internet site requested by the user, the first check unit is instructed to prepare this information.

5. An apparatus in accordance with one of the preceding claims, **characterized in that** the database includes the information whether an internet site requested by the user is liable for costs beyond a lump sum for the user requesting the site or which internet sites are covered by the lump sum.

6. An apparatus in accordance with one of the preceding claims, **characterized in that** an actuation element is provided on whose actuation the invoked internet site is released for the user after the generation of the display.

7. A method for communication between a mobile terminal and the internet using a mobile data gateway, **characterized in that**, on requesting an internet site, a display perceptible for the user is generated relating to the costs and/or cost liability for the invoking of the internet site, **characterized in that** the display relating to the costs and/or cost liability is only generated when the user requests an internet site whose costs differ from the costs of the internet site the user is using at the time of the request.

8. A method in accordance with claim 7, **characterized in that** a display is generated when the costs for the requested internet site are not covered by a flat rate paid by the user.

9. A method in accordance with one of the preceding claims 7 or 8, **characterized in that** the requested internet site is released for the user after the display has been generated and after a actuation element has been actuated by the user.

## Revendications

1. Dispositif pour établir une communication entre un terminal mobile et l'internet comprenant une passerelle de données mobiles, qui commande l'accès à des contenus de l'internet au moyen d'un terminal mobile, une base de données, qui contient des informations pour des utilisateurs des terminaux mobiles concernant les coûts et/ou le caractère payant de pages internet, une unité de vérification, permettant de créer une information concernant les coûts et/ou le caractère payant de la page internet demandée par l'utilisateur à l'aide des informations enregistrées dans la base de données et de la page internet demandée par l'utilisateur, ainsi que des moyens, permettant, sur la base de l'information créée dans l'unité de vérification, de générer un affichage perceptible pour l'utilisateur du terminal mobile,
**caractérisé en ce que** l'unité de vérification est conçue de telle manière qu'une comparaison entre les coûts ou le caractère payant de la page internet demandée par l'utilisateur et les coûts ou le caractère payant de la page internet effectivement utilisée par l'utilisateur au moment de la demande est effectuée, et **en ce que** l'information créée dans l'unité de vérification concernant les coûts et/ou le caractère payant de la page internet demandée par l'utilisateur se base sur cette comparaison.

2. Dispositif selon la revendication 1 ou 2, **caractérisé en ce que** la base de données et/ou l'unité de vérification sont des unités séparées de la passerelle de données mobiles, l'unité de vérification étant en liaison avec la passerelle de données mobiles.

3. Dispositif selon la revendication 1 ou 2, **caractérisé en ce que** la base de données et/ou l'unité de vérification font partie de la passerelle de données mobiles.

4. Dispositif selon l'une des revendications précédentes, **caractérisé en ce qu'**une unité séparée de la passerelle de données mobiles, qui contient une première unité de vérification et une première base de données, est prévue et **en ce que** la passerelle de données mobiles contient une seconde unité de vérification et une seconde base de données, la seconde unité de vérification de la passerelle de données mobiles étant conçue de telle manière que, dans le cas où une information concernant les coûts et/ou le caractère payant de la page internet demandée par l'utilisateur ne peut pas être créée dans la seconde unité de vérification, la première unité de vérification est chargée de la création de cette information.

5. Dispositif selon l'une des revendications précédentes, **caractérisé en ce que** la base de données contient l'information indiquant si une page internet demandée par l'utilisateur est payante au-delà d'un forfait pour l'utilisateur demandant la page ou quelles pages internet sont couvertes par le forfait.

6. Dispositif selon l'une des revendications précédentes, **caractérisé en ce qu'**un élément d'actionnement est prévu, dont l'actionnement après la génération de l'affichage débloque pour l'utilisateur la page internet appelée.

7. Procédé pour établir une communication entre un terminal mobile et l'internet comprenant une passerelle de données mobiles, **caractérisé en ce que**, lors de la demande d'une page internet, un affichage perceptible pour l'utilisateur concernant les coûts et/ou le caractère payant pour l'appel de la page internet est généré, **caractérisé en ce que** l'affichage concernant les coûts et/ou le caractère payant est généré uniquement quand l'utilisateur demande une page internet dont les coûts diffèrent des coûts de la page internet que l'utilisateur utilise au moment de la demande.

8. Procédé selon la revendication 7, **caractérisé en ce qu'**un affichage est généré quand les coûts pour la page internet demandée ne sont pas couverts par un forfait réglé par l'utilisateur.

9. Procédé selon l'une des revendications précédentes 7 ou 8, **caractérisé en ce que** la page internet demandée est débloquée pour l'utilisateur après que l'affichage a été généré et après qu'un élément d'actionnement a été actionné par l'utilisateur.
